(19)

**Europäisches Patentamt**
**European Patent Office**
**Office européen des brevets**

(11) **EP 4 478 359 A1**

(12) **EUROPEAN PATENT APPLICATION**
published in accordance with Art. 153(4) EPC

(43) Date of publication:
**18.12.2024 Bulletin 2024/51**

(51) International Patent Classification (IPC):
**G10L 21/0208** (2013.01)   **G10L 21/0232** (2013.01)
**G10L 21/0264** (2013.01)

(21) Application number: **22933290.3**

(52) Cooperative Patent Classification (CPC):
**G10L 21/0208; G10L 21/0232; G10L 21/0264**

(22) Date of filing: **23.03.2022**

(86) International application number:
**PCT/JP2022/013363**

(87) International publication number:
**WO 2023/181144 (28.09.2023 Gazette 2023/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventor: **TANAKA, Nobuaki**
**Tokyo 100-8310 (JP)**

(74) Representative: **Pfenning, Meinig & Partner mbB**
**Patent- und Rechtsanwälte**
**Theresienhöhe 11a**
**80339 München (DE)**

(54) **NOISE ELIMINATION DEVICE AND METHOD**

(57) A noise removal device that can handle temporal variation of noise with a single acoustic sensor is provided.

The noise removal device includes:
a Fourier transform unit to divide one input signal, which contains a component other than a target signal, into frames sectioned by fixed time and transform the input signal into a frequency spectrum so as to generate a plurality of pairs of frequency spectra, the pairs of frequency spectra having a fixed time difference, by using a delay amount;
a cross spectrum unit to generate a plurality of cross spectra or a plurality of coherences from the plurality of pairs of frequency spectra having the fixed time difference; and
a noise removal unit to average the plurality of cross spectra or the plurality of coherences so as to extract a power spectrum of the target signal.

Fig. 1

EP 4 478 359 A1

## Description

### Technical Field

The present invention relates to noise removal device and method with which components other than a target signal are removed as noise from an input signal, which is obtained from an acoustic sensor, so as to extract the target signal.

### Background Art

A diagnostic technique has been proposed in which an operating sound of equipment is observed using an acoustic sensor such as a microphone and whether the observed acoustic signal (input signal) contains an abnormal sound or not is determined, so as to automatically detect an abnormal operation of the equipment.

The environments of sites that require the above-mentioned diagnostic technique are often machine rooms or manufacturing lines, for example, where a large number of mechanical equipment is installed around, and unless countermeasures against noise such as noise and electrical noise generated by these pieces of mechanical equipment and the like can be established, it is difficult to accurately detect an abnormal operation from the operating sounds of equipment in the above-mentioned environments.

Many techniques for noise removal as that mentioned above have been proposed. For example, spectral subtraction is one of the most basic noise removal techniques. In spectral subtraction, a power spectrum of noise is obtained in advance by some method, and then the power spectrum of the noise is subtracted from a power spectrum of an input signal. Although this method is simple, the method can effectively remove noise when the power spectrum of noise is stationary. However, in the case of non-stationary noise whose timbre varies over time, the power spectrum of the noise cannot be estimated well, and noise removal performance is significantly degraded.

To address the above-mentioned problem, there is a known method in which noise is removed by focusing on phase components of input signals acquired from a plurality of acoustic sensors, instead of estimating a power spectrum of noise. For example, a technique has been disclosed that calculates the magnitude of temporal variation of a phase difference between two acoustic sensors for each frequency, and removes frequency components with large temporal variation as noise (Patent Literature 1).

### Citation List

#### Patent Literature

Patent Literature 1: JP 2011-033717

### Summary of Invention

#### Technical Problem

However, conventional noise removal devices have the following problem. The conventional noise removal device described in Patent Literature 1 obtains a phase difference from two acoustic sensors installed at a predetermined interval from each other. Therefore, at least two acoustic sensors need to be installed at different positions.

The present invention was made to solve the above-mentioned problem, and an object of the present invention is to provide noise removal device and method that can handle non-stationary noise whose timbre varies over time with an acoustic sensor installed at a single location.

#### Solution to Problem

A noise removal device according to the present disclosure includes:

a Fourier transform unit to divide an input signal, the input signal containing a component other than a target signal, into frames sectioned by fixed time and transform the input signal into a frequency spectrum so as to generate a plurality of pairs of frequency spectra, the pairs of frequency spectra having a fixed time difference, by using a delay amount;
a cross spectrum unit to generate a plurality of cross spectra or a plurality of coherences from the plurality of pairs of frequency spectra having the fixed time difference; and
a noise removal unit to average the plurality of cross spectra or the plurality of coherences so as to extract a power spectrum of the target signal.

A noise removal method according to the present disclosure includes:

by a Fourier transform unit, dividing an input signal, the input signal containing a component other than a target signal, into frames sectioned by fixed time and transforming the input signal into a frequency spectrum so as to generate a plurality of pairs of frequency spectra, the pairs of frequency spectra having a fixed time difference, by using a delay amount;

generating, by a cross spectrum unit, a plurality of cross spectra or a plurality of coherences from the plurality of pairs of frequency spectra having the fixed time difference, and

averaging, by a noise removal unit, the plurality of cross spectra or the plurality of coherences so as to extract a power spectrum of the target signal.

## Advantageous Effects of Invention

The present disclosure exhibits an advantageous effect of providing a noise removal device that can handle non-stationary noise whose timbre varies over time with an acoustic sensor installed at a single location.

## Brief Description of Drawings

Fig. 1 is a block configuration diagram of a noise removal device according to Embodiment 1.
Fig. 2 schematically illustrates temporal variation of a cross spectrum with respect to a frequency spectrum of a target signal.
Fig. 3 illustrates another example of temporal variation of a cross spectrum with respect to a frequency spectrum of a target signal.
Fig. 4 schematically illustrates temporal variation of a cross spectrum with respect to a frequency spectrum of noise.
Fig. 5 is a graph of frequency characteristics of a periodic signal which is a target signal.
Fig. 6 is a graph of frequency characteristics of non-stationary noise.
Fig. 7 is a graph of frequency characteristics of a test signal (input signal) obtained by superimposing non-stationary noise on a target signal.
Fig. 8 is a graph of frequency characteristics of an input signal from which noise is removed, as an example showing a noise removal effect of the noise removal device according to Embodiment 1.
Fig. 9 is a flowchart showing an order of noise removal processing in Embodiment 1.
Fig. 10 is a configuration diagram of hardware included in the noise removal device according to Embodiment 1.
Fig. 11 is a block configuration diagram of a noise removal device according to Embodiment 2.
Fig. 12 is a flowchart showing an order of noise removal processing in Embodiment 2.
Fig. 13 is a block configuration diagram of a noise removal device according to Embodiment 3.
Fig. 14 is a flowchart showing an order of noise removal processing in Embodiment 3.
Fig. 15 is a block configuration diagram of a noise removal device according to Embodiment 4.

## Description of Embodiments

In description of embodiments and drawings, the same and corresponding components are given the same reference characters. Description of components having the same reference characters will be omitted or simplified as appropriate. In the following embodiments, "unit" may be read as "circuit", "step", "procedure", or "processing" as appropriate.

Embodiment 1.

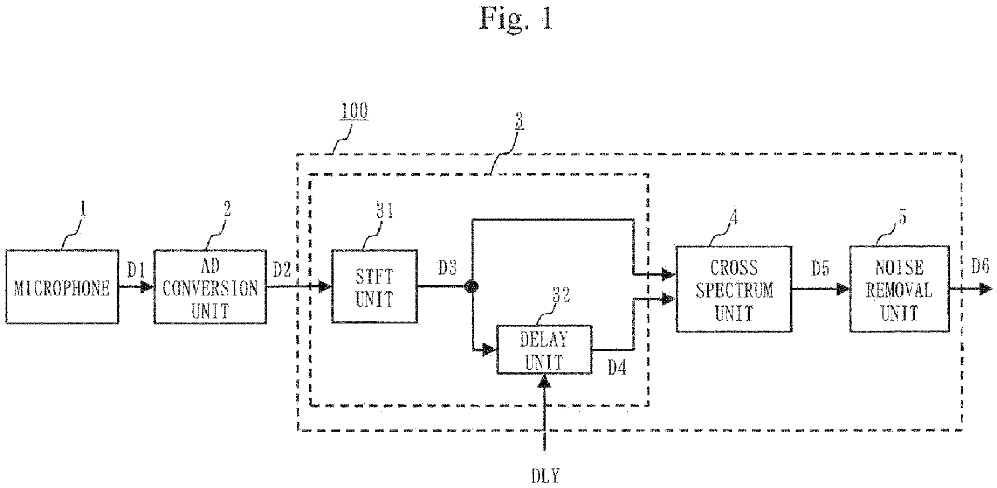

A noise removal device according to Embodiment 1 will be described with reference to Figs. 1 to 10.
In the present embodiment, it is assumed that an operating sound of equipment (that is, a target signal) is that of equipment which generates a periodic operating sound associated with an operation of a rotating unit (such as a motor, a generator, a turbine, a compressor, a blower, a flywheel, a transmission, a gear, a wheel, an axle, and a bearing). However, target equipment does not necessarily have to have a rotating unit. The present invention can be applied to any equipment as long as the equipment generates periodic operating sounds. Further, noise to be removed is, for example, air blowing noise from an air conditioner, electrical white noise, vehicle running noise, noise in factories, and the like.
Although a microphone will be used as a specific example of an acoustic sensor hereinafter, the acoustic sensor in the present invention is not limited to a microphone. For example, acoustic transducers (such as vibration sensors and ultrasonic sensors) and acceleration sensors (such as acceleration pickups and laser Doppler accelerometers) can also be used.

<Device>

Fig. 1 is a block configuration diagram of the noise removal device according to Embodiment 1. In Fig. 1, a noise removal device 100 in the present embodiment is composed of a Fourier transform unit 3, a cross spectrum unit 4, and a noise removal unit 5. The Fourier transform unit 3 is composed of a STFT unit 31 and a delay unit 32. Here, in terms of a delay amount DLY to be given to the delay unit 32, a predetermined value corresponding to a target signal or a noise state may be preliminarily set from a plurality of candidates for the delay amount.

A microphone 1 observes (acquires) an acoustic waveform in which noise is superimposed on an operating sound of equipment, which is a target signal, and outputs the observed acoustic waveform as an analog signal D1.

An AD conversion unit 2 converts (samples) the analog signal D1 from analog signal to digital signal based on a predetermined resolution (for example, 16 bits) and a predetermined sampling frequency (for example, 16000 Hz). The AD conversion unit 2 outputs the sampled time-domain signal (digital signal) as an input signal D2. The input signal D2 will be referred to as x(t) below. Here, t denotes discrete time.

The Fourier transform unit 3 performs Fourier transform on the input signal D2, and uses the delay amount DLY to generate a plurality of pairs of frequency spectra having a fixed time difference. The pair of frequency spectra having a fixed time difference is specifically a pair of frequency spectra composed of elements of a first array D3 of frequency spectra and elements of a second array D4 of frequency spectra delayed in the time direction compared to the first array D3 of frequency spectra, which will be described later. Internal processing of the Fourier transform unit 3 will be described below.

The STFT unit 31 first divides the input signal D2 (x(t)) into frames with a predetermined time interval (for example, 32 msec). Next, the STFT unit 31 combines an input signal of a current frame and an input signal of the next frame to generate an input signal with a predetermined interval length (64 msec). Windowing processing (for example, Hanning window) is performed on the input signal with the predetermined interval length so as to calculate a windowed input signal x^(t).

Subsequently, the STFT unit 31 transforms the windowed input signal x^(t) into a frequency spectrum X(ω,k) of the input signal in the current frame by Short-Time Fourier Transform (hereinafter referred to as STFT). Here, ω denotes a discrete frequency and k denotes number of the current frame. The frequency spectrum X(ω,k) of the input signal in the current frame is outputted as the first array D3 of frequency spectra together with frequency spectra of input signals of past frames.

The first array D3 of frequency spectra is an array of frequency spectra of input signals in past frames up to the point K-1 frames back when the number k of the current frame is assumed as the starting point (0). Specifically, the first array D3 of frequency spectra is X(ω,0), X(ω,-1), ..., X(ω,-(K-1)). Here, K denotes the size of the first array D3 of frequency spectra.

Frequency spectra of input signals in past frames are stored in a memory MEM, which is not shown, in the noise removal device 100. The memory MEM stores frequency spectra of input signals in past frames up to the point K-1+DLY frames back. Here, DLY denotes a predetermined delay amount. Contents of the memory MEM (that is, frequency spectra of input signals in past frames) are updated using the frequency spectrum X(ω,k) of an input signal in a current frame after outputting the first array D3 of frequency spectra and the second array 4 of frequency spectra.

The delay unit 32 reads frequency spectra of input signals in past frames from the memory MEM, not shown, so as to generate the second array D4 of frequency spectra, which is delayed compared to the first array D3 of frequency spectra, based on a predetermined delay amount DLY. Specifically, when the second array D4 of frequency spectra is denoted by X_D(ω,k), an array X_D(ω,k) with a relation X_D(ω,k) = X(ω,k-DLY) (where k = 0, -1, ..., -(K-1)) is generated.

The second array D4 of frequency spectra is an array of frequency spectra of input signals in past frames up to the point K-1+DLY frames back when the frame up to the point DLY frames back is the starting point. Specifically, the second array D4 of frequency spectra is X_D(ω,0) = X(ω,-DLY), X_D(ω,-1) = X(ω,-1-DLY), ..., X_D(ω,-(K-1)) = X(ω,-(K-1)-DLY). That is, the component of the k-th frame of the second array D4 of frequency spectra and the component of the k-th frame of the first array D3 of frequency spectra are a pair of frequency spectra each having a fixed time difference (DLY).

The cross spectrum unit 4 generates a plurality of cross spectra from pairs of frequency spectra of frames having the fixed time difference (DLY) by using the first array D3 of frequency spectra and the second array D4 of frequency spectra. The generated cross spectra of respective frames are outputted as an array D5 of cross spectra by combining the cross spectrum of the current frame (k = 0) and the cross spectra of the past frames (k = -1, ..., (K-1)).

Here, a cross spectrum is a product of complex numbers when one of two spectra is a complex conjugate. When the cross spectrum of the number k of the current frame is denoted as S(ω,k), the array D5 of cross spectra can be calculated by, for example, expression (1) using the first array D3 of frequency spectra and the second array D4 of frequency spectra.
FORMULA 1

$$S(\omega,k) = X(\omega,k)\overline{X_D(\omega,k)}$$
$$= X(\omega,k)\overline{X(\omega,k-\tau)} \quad , \omega = 0, \dots, W-1, k = 0, -1, \dots, -(K-1) \quad (1)$$

Here, $\tau$ denotes a delay amount expressed by the number of frames (that is, DLY), W denotes the number of bins of frequency spectra, K denotes the number of frames, and the overline in expression (1) represents the complex conjugate. The array D5 of cross spectra is an array of cross spectra composed of cross spectra in past frames up to the point K-1 frames back when the number k of the current frame is assumed as the starting point (0). Specifically, the array D5 of cross spectra is $S(\omega,0)$, $S(\omega,-1)$, ..., $S(\omega,-(K-1))$.

As in the case of the first array D3 of frequency spectra, as the array D5 of cross spectra, for example, data for K frames (K is a positive integer), which is the interval targeted for noise removal, is stored in the memory (not shown) in the noise removal device 100. The value of K and the capacity of the memory may be, for example, in a range where expression (2), described later, can be calculated.

The noise removal unit 5 removes noise in an input signal by averaging the array D5 of cross spectra in the time direction so as to extract the power spectrum of a target signal. Specifically, a power spectrum D6 of a target signal is extracted by averaging the array D5 of cross spectra in a predetermined frame interval and calculating an average power for each frequency. When the power spectrum D6 of the target signal is denoted as $P(\omega)$, the power spectrum D6 of the target signal can be calculated by, for example, expression (2) using the array D5 of cross spectra.
FORMULA 2

$$P(\omega) = \frac{1}{K_C} \sum_{k=k_{start}}^{k_{end}} |S(\omega,k)|, \qquad \omega = 0, \dots, W-1 \qquad (2)$$

Here, $k_{start}$ denotes the number of the starting frame of an interval targeted for noise removal, and $k_{end}$ denotes the number of the ending frame. Further, Kc denotes the length of the interval targeted for the noise removal and denotes the number of frames included in this interval (that is, $Kc = k_{end}-k_{start}+1$). This expression (2) can be interpreted as averaging the array D5 of cross spectra on a complex plane and outputting its absolute value as a power spectrum. Therefore, the obtained power spectrum component is a component obtained by removing the effect of noise to extract only a periodic component of an operating sound of equipment, which is a target signal. Here, Kc may be appropriately changed depending on the type of noise, the state of noise, or the state of the target signal. Furthermore, in expression (2), it is not necessary to perform calculations in the order of frame numbers k (for example, starting from $k = k_{start}$ and ending with $k = k_{end}$).

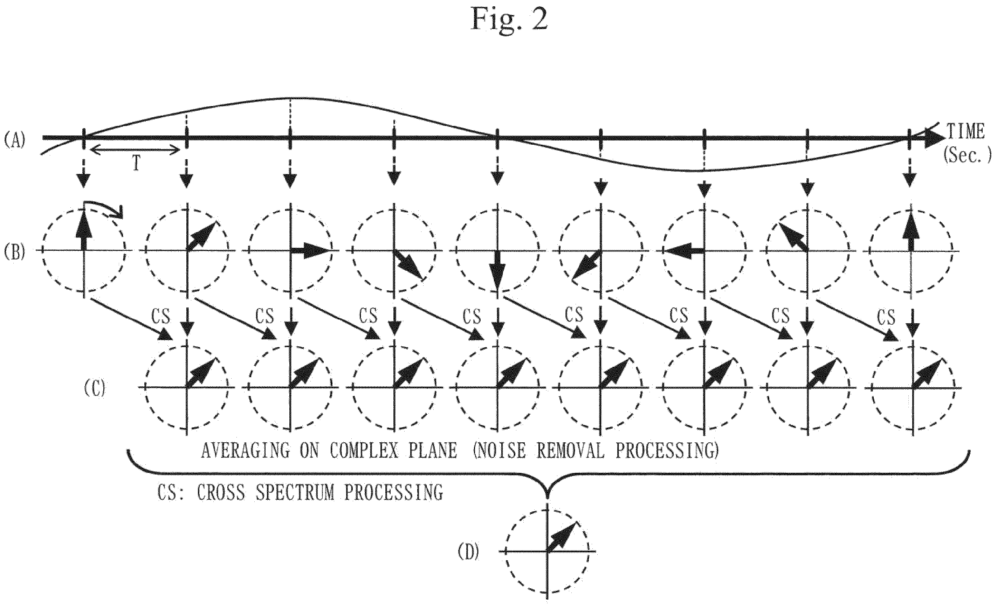

Here, the principle that only the periodic component of an operating sound of equipment, which is a target signal, is extracted from an input signal through the series of processing described above will be described, with reference to Figs. 2 to 4.

Fig. 2 schematically illustrates temporal variation of a cross spectrum with respect to a frequency spectrum of a target signal. In Fig. 2, time elapses from left to right. A unit circle shown in Fig. 2 represents a complex plane. (A) of Fig. 2 shows a time waveform of a target signal, which is a 1 kHz sine wave. (B) of Fig. 2 (unit circles in the first row) shows a frequency spectrum (complex number) of 1 kHz at each time in a fixed time interval T, with an arrow.

A target signal is periodic and therefore, the phase of a frequency spectrum (an argument of a complex number) rotates clockwise over time at a fixed speed. The fixed time interval T is defined to have a value obtained by dividing one period of a sine wave into eight equal parts, for ease of understanding the principle. The fixed time interval T does not necessarily have to be synchronized with the period of a target signal, and may be set to any value.

The effect of cross spectrum processing by the cross spectrum unit 4 will now be discussed. An absolute value of a cross spectrum is a product of amplitudes of two frequency spectra, but an argument of a cross spectrum will be focused here. (C) of Fig. 2 (unit circles in the second row) shows a cross spectrum obtained from two frequency spectra, which are a frequency spectrum at each time and a frequency spectrum shifted by the fixed time interval T, with an arrow. An argument of a cross spectrum is a difference between arguments of two frequency spectra (that is, phase difference). Therefore, the argument of a cross spectrum relative to a frequency spectrum, which is rotating at a fixed speed, is a fixed value, as shown in the unit circles in the second row in () of Fig. 2.

The effect of averaging cross spectra in the time direction performed by the noise removal unit 5 will now be discussed. (D) of Fig. 2 (unit circle in the third row) shows a power spectrum obtained by averaging a plurality of cross spectra within a predetermined interval on a complex plane, with an arrow. As shown in (D) of Fig. 2, the time average of a plurality of cross spectra within a predetermined interval in the complex plane has the same amplitude as the power of a frequency spectrum of a target signal because the arguments of the cross spectra have a fixed value. This amplitude remains as a final calculation result.

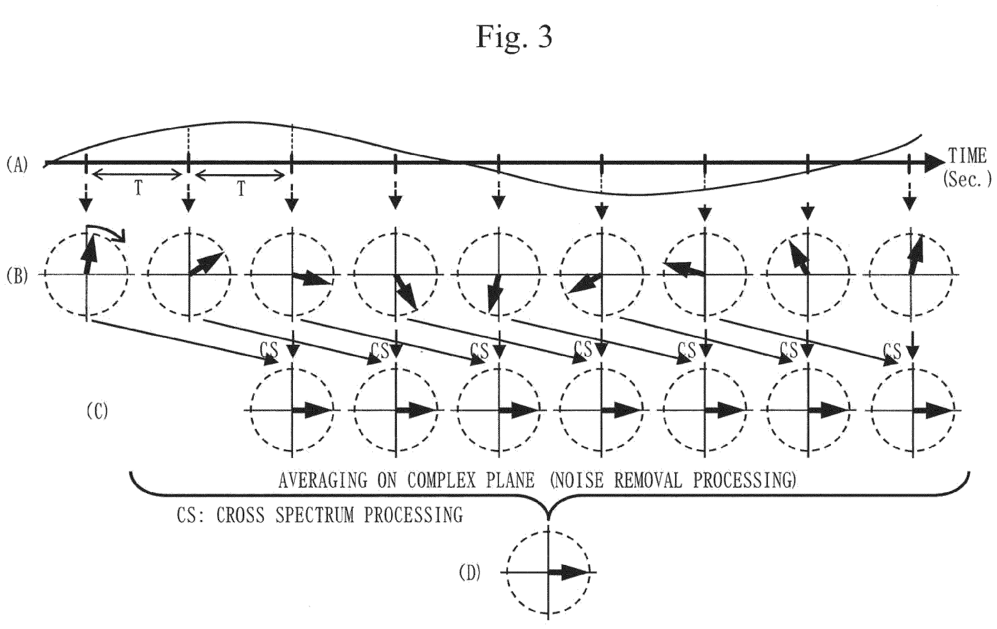

Fig. 3 illustrates another example of temporal variation of a cross spectrum with respect to a frequency spectrum of a target signal. Fig. 3 uses the same target signal (1 kHz sine wave) as in Fig. 2, but the acquisition time of a frequency spectrum at each time is shifted. Further, the time difference between two frequency spectra for calculating a cross spectrum is denoted as 2T. In this case as well, the argument of a cross spectrum is a fixed value as the unit circles in the second row shown in (C) of Fig. 3, as is the case with Fig. 2. As shown in (D) of Fig. 3, the time average in the complex plane of a plurality of cross spectra within a predetermined interval has the same amplitude as the power of a target signal, as is the case with Fig. 2.

In the Fourier transform unit 3, the second array D4 of frequency spectra is generated by giving a fixed frame interval delay $\tau$ to the first array D3 of frequency spectra. This is similar processing to, for example, shifting a frequency spectrum acquired at the fixed time interval T by a predetermined time interval, as shown in (C) of Fig. 2 (or (C) of Fig. 3). In the cross spectrum D5 which is calculated from the second array of frequency spectra, which is generated as mentioned above, and the first array of frequency spectra, the phase difference can be kept fixed if an input signal is periodic, that is, if the rotation speed and the sound pressure level of equipment are stable. In addition, the phase difference can be kept fixed even if the acquisition time of a frequency spectrum of each frame and the delay amount for calculating a cross spectrum are changed.

Therefore, the array D5 of cross spectra at any given time has the same absolute value as the power spectrum D6 of a target signal in the complex plane and has an argument of fixed value which does not change in the time direction, as shown in the unit circles in the second row in (C) of Fig. 2. Thus, target signals are not influenced by the averaging processing (that is, noise removal) of cross spectra in the time direction performed by the noise removal unit 5. In other words, target signals do not become targets of noise removal.

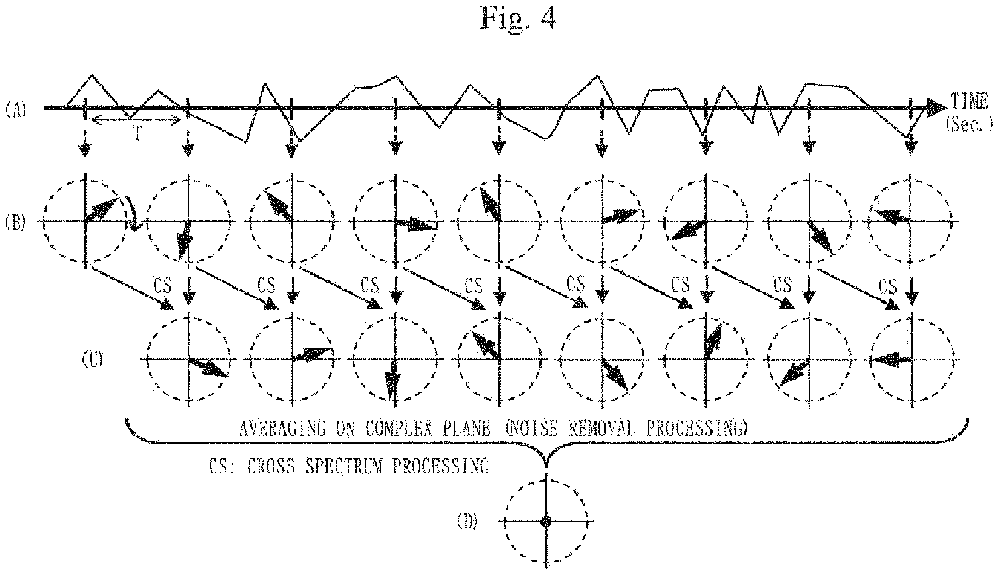

Meanwhile, Fig. 4 schematically illustrates temporal variation of a cross spectrum with respect to a frequency spectrum of noise. In Fig. 4, time elapses from left to right. A unit circle shown in Fig. 4 represents a complex plane. (A) of Fig. 4 shows a time waveform of noise (non-stationary noise). (B) of Fig. 4 (unit circles in the first row) shows a frequency spectrum (complex number) of 1 kHz at each time in a fixed time interval T, with an arrow. The phase of noise is inconsistent and therefore, the phase (an argument of a complex number) of a frequency spectrum at each time is random.

(C) of Fig. 4 (unit circles in the second row) shows a cross spectrum obtained from two frequency spectra, which are a frequency spectrum at each time and a frequency spectrum shifted by the fixed time interval T, with an arrow. If a cross spectrum is obtained from two frequency spectra whose phases are random, it is also random.

(D) of Fig. 4 (unit circle in the third row) shows a power spectrum obtained by averaging a plurality of cross spectra within a predetermined interval on a complex plane, with an arrow. As shown in (D) of Fig. 4, a value of the time average of the plurality of cross spectra within the predetermined interval in the complex plane approaches zero because the arguments of the cross spectra are random. In other words, noise is removed from a final calculation result.

When an input signal is noise, the argument of the cross spectrum D5, which is calculated from the first array of frequency spectra and the second array of frequency spectra, is random. When such averaging processing of cross spectra in the time direction is performed, an obtained value approaches zero. Accordingly, the influence of noise is finally excluded.

From the above, by performing each processing of the Fourier transform unit 3, the cross spectrum unit 4, and the noise removal unit 5 described in the present embodiment, noise is removed from an input signal and only a power spectrum of a target signal is outputted.

It is notable about the series of processing described above that there is no need to know an exact period of a target signal. It is generally difficult to analyze an exact period of a target signal from an input signal. The noise removal device according to the present embodiment gives a fixed delay amount to an array of frequency spectra, but the delay amount does not necessarily have to be synchronized with the period of a target signal. Therefore, even for a target signal with an unknown period, stable noise removal performance is achieved.

Furthermore, the only condition necessary for noise removal is randomness of phase difference in frequency spectra, and there is no restriction on the temporal variation of the timbre of the noise (that is, amplitude and frequency of the noise). Therefore, the noise removal effect of the noise removal device of the present embodiment is remarkably effective even for non-stationary noise whose timbre varies over time.

The effectiveness of the noise removal processing described above will be demonstrated using an example of a test signal that simulates an operating sound of equipment and non-stationary noise. As a target signal (a periodic signal simulating the operating sound of the equipment), a signal in which a sine wave of integral multiples of 500 Hz was superimposed from 500 Hz to 7500 Hz was used. Factory noise was used as the non-stationary noise. Here, the time length of the target signal and non-stationary noise is 10 seconds. A signal obtained by superimposing non-stationary noise on this target signal was used as the test signal (that is, an input signal). The sampling frequency of the test signal was 16000 Hz.

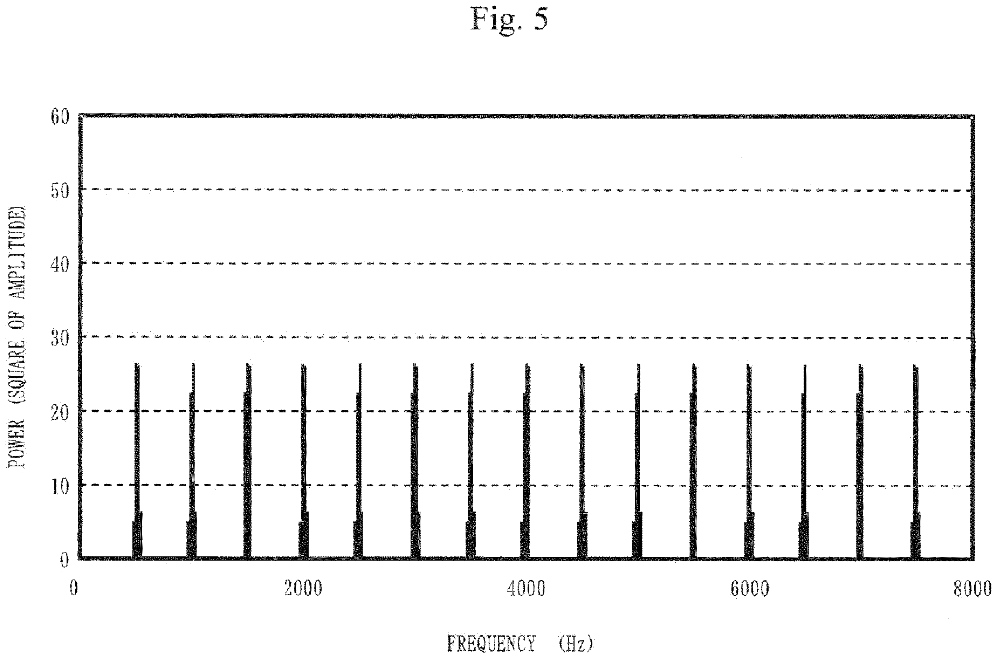

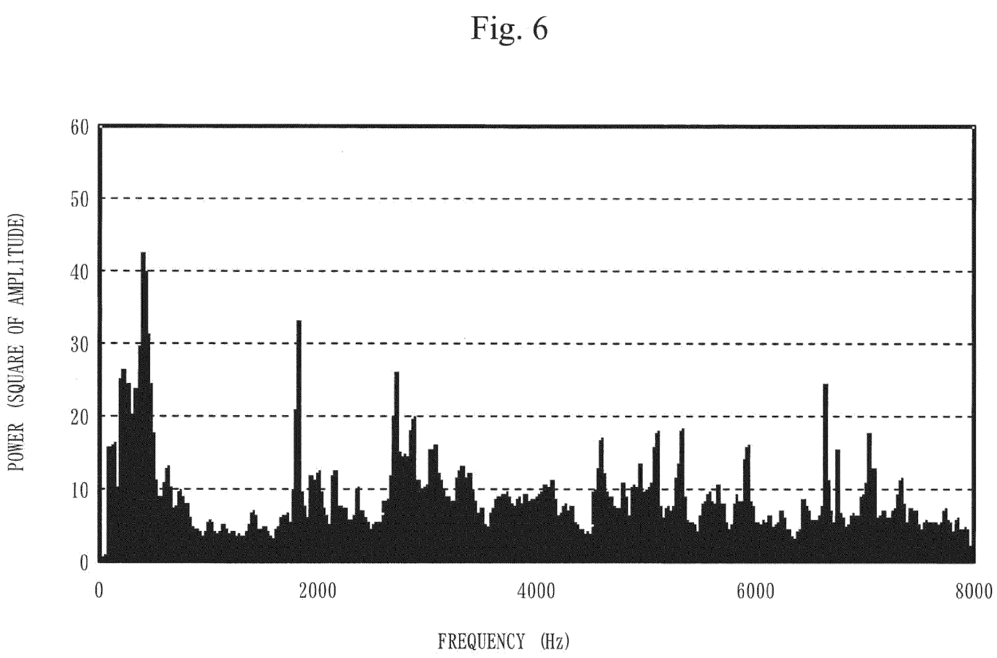

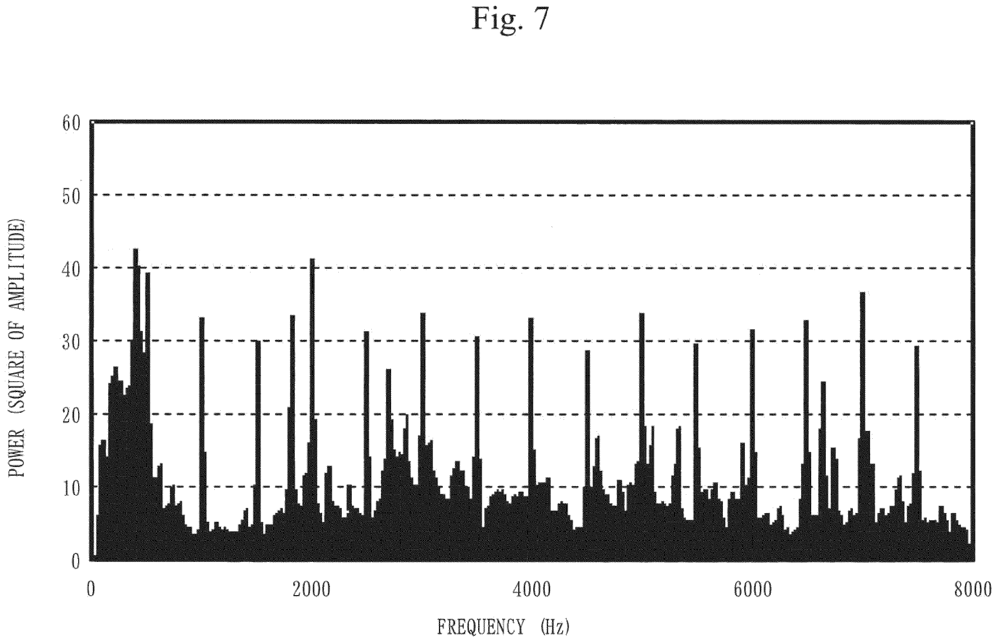

Figs. 5 to 7 illustrate the above-mentioned respective signals. Fig. 5 is a graph of frequency characteristics of the periodic signal which is the target signal. Fig. 6 is a graph of frequency characteristics of the non-stationary noise. Fig. 7 is a graph of frequency characteristics of the test signal (input signal) obtained by superimposing non-stationary noise on the target signal. More specifically, Figs. 5 to 7 show time-averaged (frame-averaged) values of power spectral components obtained by performing frequency analysis to each of the above-mentioned signals through STFT with an analysis interval length of 1024 samples (64 msec) and an analysis interval period of 512 samples (32 msec). In each of the drawings, the vertical axis of the graph represents power (square of amplitude) and the horizontal axis represents frequency (Hz). Referring to the test signal shown in Fig. 7, in addition to the spectral component of the periodic signal, spectral components due to the non-stationary noise are distributed throughout the frequency.

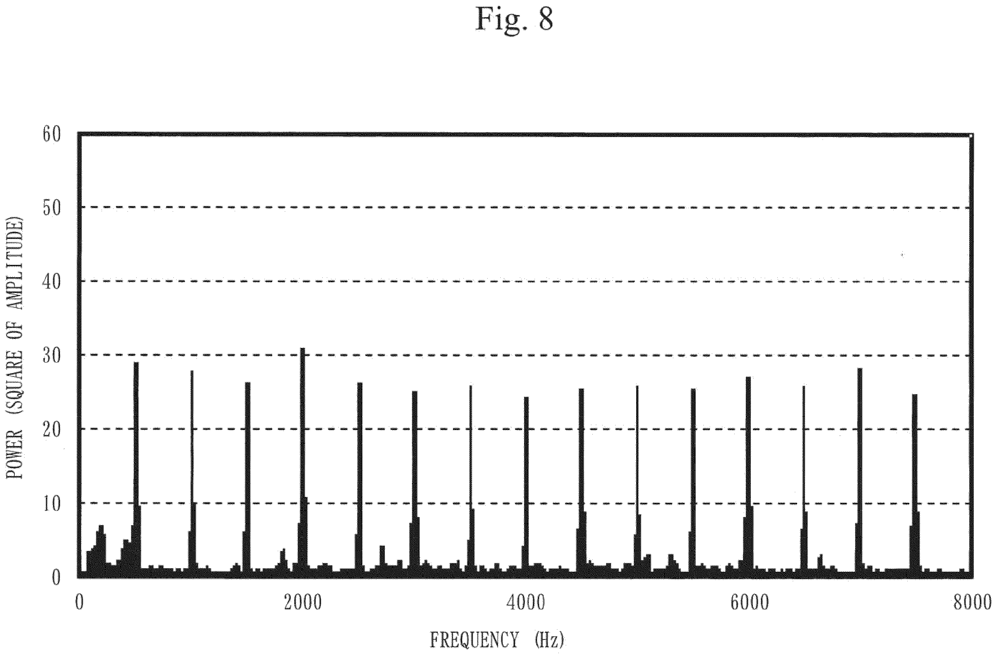

The results of removing noise from the test signal (input signal) by the noise removal device according to the present embodiment are illustrated. Fig. 8 is a graph of frequency characteristics of the input signal from which noise is removed. Fig. 8 shows the same frequency analysis as that performed in Figs. 5 to 7. In Fig. 8, the vertical axis of the graph represents power (square of amplitude) and the horizontal axis represents frequency (Hz). The delay amount DLY ($\tau$) was set to 2 frames (64 msec). Referring to Fig. 8, it can be seen that the non-stationary noise components are significantly reduced and the components of the target signal are extracted. From the above results, by applying the noise removal device according to this Embodiment 1 to a test signal, time-varying non-stationary noise can be removed from the test signal, and a periodic signal, which is the target signal, can be extracted. Thus, non-stationary noise that varies over time can be removed with a single microphone configuration.

<Flowchart>

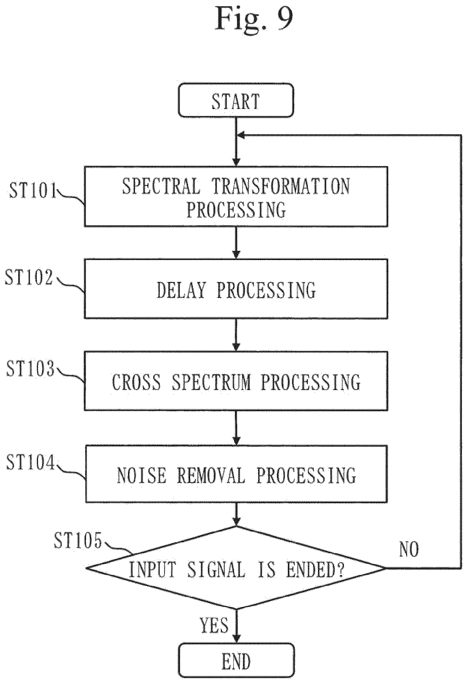

Fig. 9 is a flowchart showing an order of noise removal processing in Embodiment 1.

In step ST101, the STFT unit 31 performs spectral transformation processing on the input signal D2 by STFT with a predetermined analysis interval length (for example, 64 msec) and outputs the first array D3 of frequency spectra (step ST101).

In step ST102, the delay unit 32 produces a time delay corresponding to the delay amount DLY on the first array D3 of frequency spectra generated in step ST101, and outputs the second array D4 of frequency spectra (step ST102).

In step ST103, the cross spectrum unit 4 generates a plurality of cross spectra from pairs of frequency spectra of frames having a fixed time difference (DLY) by using the second array D4 of frequency spectra generated in step ST102 and the first array D3 of frequency spectra generated in step ST101. The generated cross spectra of respective frames are outputted as the array D5 of cross spectra by combining the cross spectrum of a current frame and the cross spectra of past frames (step ST103).

In step ST104, the noise removal unit 5 removes noise of the input signal by averaging the array D5 of cross spectra in the time direction so as to extract the power spectrum D6 of the target signal (step ST104).

In step ST105, when the Fourier transform unit 3 determines that the input of the input signal D2 is ended (YES in step ST105), the noise removal processing is ended (END). When it is determined that the input signal D2 continues to be inputted (NO in step ST105), the processing returns to the beginning of step ST101 and sequentially continues the respective processing from step ST101 to step ST105 for the input signal D2 of the next frame.

In the above description of the operation of the noise removal device, the noise removal processing is performed to the input signal D2 inputted from the AD conversion unit 2 to obtain the power spectrum D5 of a target signal. However, the processing is not limited to this. For example, a short-time inverse Fourier transform may be performed on the power spectrum of a target signal to restore the spectral components in a frequency domain to a time-domain signal.

Further, in the above description of the operation of the noise removal device, the analog signal D1 inputted from the microphone 1 is converted to the input signal D2 in the AD conversion unit 2 and the noise removal processing is performed to this input signal D2. However, the configuration is not limited to this. For example, the microphone 1 and the AD conversion unit 2 can be omitted by inputting digital signal data of pre-recorded observation waveforms as the input signal D2 of the noise removal device of the present invention.

In addition, the STFT unit 31 employs the short-time Fourier transform so as to transform a time-domain signal into a frequency-domain spectrum. However, the method is not limited to this. For example, the STFT unit 31 may transform a time-domain signal into a frequency-domain spectrum using a known method such as Fast Fourier Transform.

Further, as a modification other than the above description, coherence obtained from cross spectrum may be used instead of cross spectrum. For example, a signal-to-noise ratio (SN ratio) for each frequency may be obtained by using coherence, and the SN ratio may be used for performing noise removal in a STFT domain. Specifically, coherence arrays obtained from the first array D3 of frequency spectra and the second array of frequency spectra are averaged. Coherence is a cross spectrum divided (normalized) by its absolute value. Therefore, averaged coherence can be regarded as an SN ratio of an input signal. Based on the SN ratio, a target signal can be obtained using, for example, a Wiener filter. This method makes it possible to directly restore a frequency-domain spectrum, from which noise is removed, to a time-domain signal even without employing the short-time inverse Fourier transform.

<Hardware configuration>

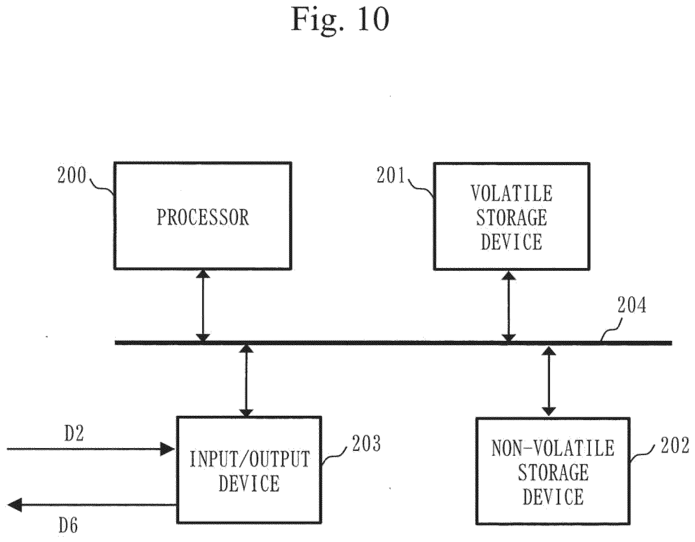

Each of the components of the noise removal device 100 illustrated in Fig. 1 can be realized by, for example, a computer, which is an information processing device incorporating a processor. Fig. 10 is a configuration diagram of hardware included in the noise removal device according to Embodiment 1. In Fig. 10, the noise removal device 100 is composed of a processor 200, a volatile storage device 201, a non-volatile storage device 202, an input/output device 203, and a signal path 204.

The computer incorporating the processor 200 is, for example, a stationary computer such as a personal computer and a server-type computer, a portable computer such as a smartphone and a tablet computer, or a microcomputer for equipment embedded applications such as an equipment diagnostic system, and a SoC (System on Chip).

The processor 200 controls the overall noise removal device 100 and executes each component of the noise removal device 100. For example, the processor 200 is a CPU (Central Processing Unit), an FPGA (Field Programmable Gate Array), a DSP (Digital Signal Processor), and so forth. The processor 200 may be a single processor or a multi-processor. Further, the noise removal device 100 may include processing circuitry such as an ASIC (Application Specific Integrated Circuit) in addition to the computer. The processing circuitry may be a single circuit or a composite circuit.

The volatile storage device 201 is a main storage device of the noise removal device 100. The volatile storage device 201 is, for example, a RAM (Random Access Memory).

The non-volatile storage device 202 is an auxiliary storage device of the noise removal device 100. The non-volatile storage device 202 is, for example, a ROM (Read Only Memory), an HDD (Hard Disk Drive), or an SSD (Solid State Drive).

The input/output device 203 is an input/output interface of the noise removal device 100. The input/output device 203 is used, for example, for acquiring the input signal D2, which is an output of the AD conversion unit 2. The input/output device 203 is also used for outputting an input signal which is obtained by the noise removal device 100 and from which noise is removed (that is, the power spectrum D6 of a target signal) to external measurement equipment (not shown).

The processor 200 uses the volatile storage device 201 (for example, RAM) as working memory and operates in accordance with a computer program (that is, a noise removal program) read from the non-volatile storage device 202 (for example, ROM) through the signal path 204. Here, the noise removal program may be supplied from the outside of the noise removal device 100 via the input/output device 203. Further, the noise removal program may be distributed by a computer-readable non-volatile storage medium (for example, a CD (Compact Disc), a DVD (Digital Versatile Disc), a flash memory, and so forth).

The input signal from which noise is removed is sent to measurement equipment connected via the input/output device 203. Examples of this measurement equipment include various measurement devices such as an equipment diagnostic device, an abnormal sound detection device, and a data recording device, or computers on which a measurement/analysis program for various measurement devices runs.

Further, the input signal from which noise is removed may be sent to measurement equipment at a remote location via a wired or wireless network connected to the input/output device 203. Furthermore, the microphone 1 and the AD conversion unit 2 may be installed at different positions from the noise removal device 100, and the input signal D2 acquired by the microphone 1 and AD conversion unit 2 may be inputted to the noise removal device 100 via a wired or wireless network. The wired or wireless network is, for example, a LAN (Local Area Network), the Internet, or the like. In addition, a signal from which noise is removed may be restored to a time-domain signal, amplified by an amplification device (not shown) connected to the input/output device 203, and directly outputted as an acoustic waveform using a speaker (not shown) or the like. By outputting the time-domain signal, from which noise is removed, through a speaker and presenting it to a user, the user can determine whether the noise removal device is operating correctly.

The above-mentioned noise removal device 100 is described as an independently configured device, but is not limited to this. For example, the noise removal device 100 may be configured as a part of hardware of measurement equipment (such as an equipment diagnostic device). That is, the noise removal device 100 may be incorporated in hardware of other measurement equipment mentioned above. Further, the noise removal program may be executed as a partial module of software programs that constitute the functions of other measurement equipment mentioned above. Furthermore, the noise removal program may be distributed and executed on a plurality of computers coupled by a network.

The noise removal device detailed in Embodiment 1 above is configured so that the noise removal device generates a cross spectrum of a first array of frequency spectra, which are obtained through a single microphone, and a second array of frequency spectra, which are obtained by producing a delay of a predetermined frame unit on the first array of frequency spectra, and further, averages an array of cross spectra in the time direction to remove noise of an input signal and extract a power spectrum of a target signal.

Accordingly, noise removal can be performed that can handle non-stationary noise, whose timbre varies over time, with an acoustic sensor installed at a single location.

Embodiment 2.

The delay unit 32 produces a delay corresponding to a predetermined delay amount DLY on the first array D3 of frequency spectra to generate the second array D4 of frequency spectra, which is a delayed signal, in Embodiment 1 described above, but the configuration is not limited to this. For example, a configuration can also be employed in which the delay unit 32 is installed immediately after the AD conversion unit 2, and after performing delay processing in discrete time units, STFT is respectively performed on a delayed signal and a non-delayed signal. This configuration will be described as Embodiment 2, which is a modification of Embodiment 1.

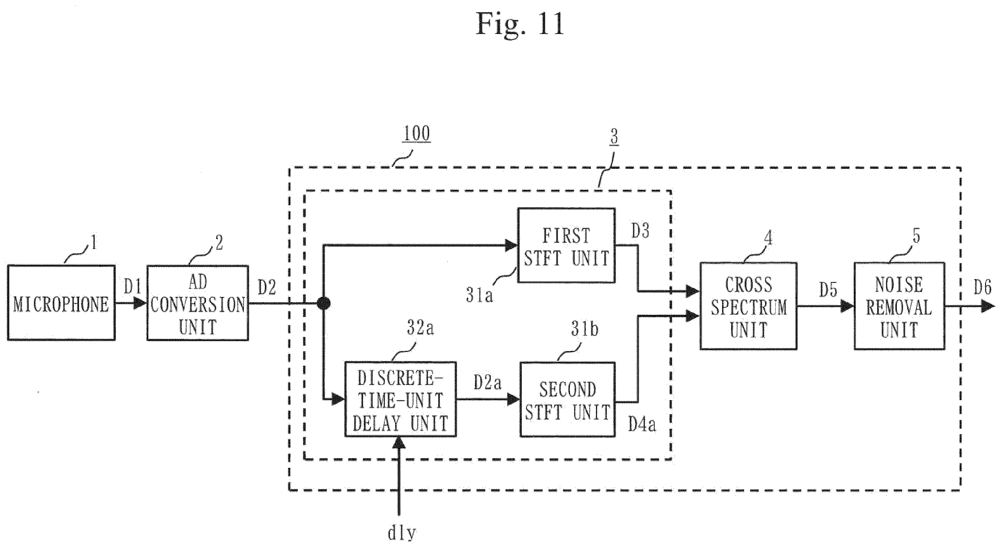

Fig. 11 is a block configuration diagram of a noise removal device according to Embodiment 2. New components compared to Fig. 1 are a discrete-time-unit delay unit 32a, a first STFT unit 31a, and a second STFT unit 31b. Other components and operations are the same as those of Fig. 1, thereby being omitted.

The discrete-time-unit delay unit 32a produces a delay, which corresponds to a delay amount dly, in the time direction on the input signal D2, which is outputted by the AD conversion unit 2 and outputs the delayed input signal D2a (x(t-dly)). Here, as an operation different from the delay unit 32 of Embodiment 1, the discrete-time-unit delay unit 32a performs delay processing in the time direction in a discrete time unit (sampling time, that is, t), which is a smaller unit than the time interval of a frame. As a method of the delay processing, for example, in addition to a method of simply shifting sample components sequentially by dly, phase control using a digital filter can be used. Production of a delay in the time direction in the discrete time unit makes it possible to set a finely tuned time delay corresponding to a target signal, providing the effect of improving the accuracy of noise removal.

Although the discrete-time-unit delay unit 32a performs delay processing in the time direction in the discrete time unit, the discrete-time-unit delay unit 32a is the same as the delay unit 32 in Fig. 1 on the point that the discrete-time-unit delay unit 32a produces delays in the time direction, which is its essential operation. From that point of view, for example, if the delay time set by the delay amount dly is the same delay amount as a predetermined frame, the discrete-time-unit delay unit 32a may be replaced with the delay unit 32.

The discrete-time-unit delay unit 32a may, for example, produce a delay in a unit finer than the sampling time (for example, 0.25 sample) on the input signal D2 by using a fractional delay filter.

The first STFT unit 31a divides the input signal D2 into frames of predetermined time interval (for example, 32 msec) and performs windowing processing (for example, Hanning window) so as to calculate windowed input signals x^(t), similarly to the STFT unit 31 illustrated in Fig. 1.

Subsequently, the first STFT unit 31a performs STFT for a predetermined analysis interval length (for example, 64 msec) with respect to the windowed input signals x^(t) so as to transform the windowed input signals x^(t) into frequency spectra and output the first array D3 of frequency spectra.

The second STFT unit 31b divides the delayed input signal D2a, which is generated by the discrete-time-unit delay unit 32a, into frames of predetermined time interval (32 msec), which is the same as the first STFT unit 31a, and further performs windowing processing (for example, Hanning window) so as to calculate windowed input signals x^(t-dly).

Subsequently, the second STFT unit 31b performs STFT for the same analysis interval length (64 msec) as that of the first STFT unit 31a with respect to the windowed input signals x^(t-dly) so as to transform the windowed input signals x^(t-dly) into frequency spectra and output the second array D4a of frequency spectra.

The cross spectrum unit 4 generates a plurality of cross spectra from pairs of frequency spectra of frames having the fixed time difference (dly) by using the second array D4a of frequency spectra (signal delayed in discrete time unit) and the first array D3 of frequency spectra (non-delayed signal). The generated cross spectra of respective frames output the array D5 of cross spectra by combining the cross spectrum of the current frame and the cross spectra of the past frames.

The second STFT unit 31b preferably employs the same windowing processing and the same analysis interval length as those for the first STFT unit 31a, but is not limited to this. Other methods may be employed as long as windowing processing or a processing delay caused by change of analysis interval length remains the same. For example, a Blackman window can be employed for the windowing processing. Furthermore, the number of frequency spectra of STFT may also be changed. In this case, at the time of cross spectrum calculation in the cross spectrum unit 4, interpolation processing or thinning processing of frequency spectra may be performed so as to match the number of frequency spectra outputted by the first STFT unit 31a.

The following processing is the same as that described in Embodiment 1, and description thereof will be omitted.

<Flowchart>

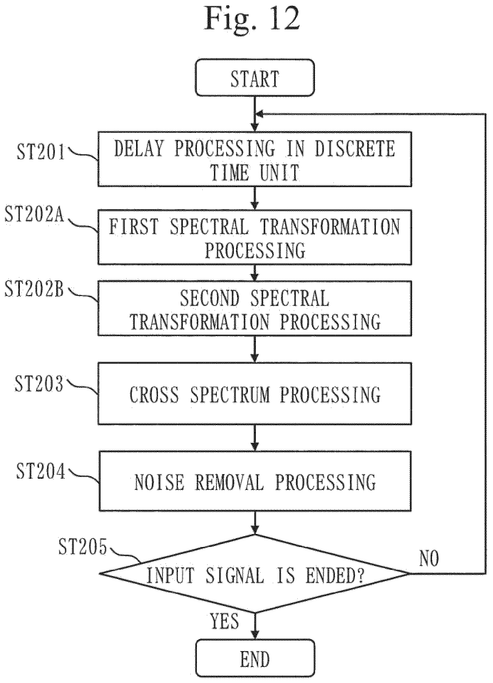

Fig. 12 is a flowchart showing an order of noise removal processing in Embodiment 2.

In step ST201, the discrete-time-unit delay unit 32a produces a time delay corresponding to the delay amount dly on the input signal D2 and outputs the delayed input signal D2a (step ST201).

In step ST202A, the first STFT unit 31a performs windowing processing on the input signal D2 with a predetermined window function (Hanning window). Further, the first STFT unit 31a performs spectral transformation processing by STFT for a predetermined analysis interval length (64 msec) so as to output the first array D3 of frequency spectra (step ST202A).

In step ST202B, the second STFT unit 31b performs windowing processing on the input signal D2a, which is a delayed signal, with the same window function (Hanning window) as that for the first STFT unit 31a. Further, the second STFT unit 31b performs spectral transformation processing by STFT for the same analysis interval length (64 msec) as that for the first STFT unit 31a so as to output the second array D4a of frequency spectra (step ST202B).

In step ST203, the cross spectrum unit 4 generates a plurality of cross spectra from pairs of frequency spectra of frames having a fixed time difference (dly) by using the second array D4a, of frequency spectra generated in step ST202B (signal delayed in discrete time unit) and the first array D3 of frequency spectra generated in step ST202A (non-delayed signal). The generated cross spectra are outputted as the array D5 of cross spectra by combining the cross spectrum of a current frame and the cross spectra of past frames (step ST203).

In step ST204, the noise removal unit 5 removes noise of the input signal by averaging the array D5 of cross spectra in the time direction so as to extract the power spectrum D6 of the target signal (step ST204).

In step ST205, when the Fourier transform unit 3 determines that the input of the input signal D2 is ended (YES in step ST205), the noise removal processing is ended (END). When it is determined that the input signal D2 continues to be inputted (NO in step ST205), the processing returns to the beginning of step ST201 and sequentially continues the respective processing from step S1201 to step ST204 for the input signal D2 of the next frame.

Regarding the order of the noise removal processing described above, the processing of step ST202B is performed after the processing of step ST202A. However, the processing of step ST202B may be performed first, or the processing of step ST202A and the processing of step ST202B may be performed in parallel.

The noise removal device detailed in Embodiment 2 above has the configuration in which after performing delay processing in the time unit, which is finer than frames, on an input signal in a time domain, STFT is respectively performed on a delayed signal and a non-delayed signal.

Accordingly, in addition to the effect of being able to perform noise removal that can handle non-stationary noise, whose timbre varies over time, with an acoustic sensor installed at a single location, a delay amount can be set precisely in the time unit that is finer than the frame unit, providing a synergistic effect of further improving the accuracy of noise removal.

Embodiment 3.

In Embodiment 1 and Embodiment 2 described above, the delay amount DLY (or dly) is set to a predetermined fixed value, but the delay amount is not limited to this. For example, it is also possible to adaptively select a delay amount from a plurality of candidates for a delay amount so as to obtain favorable noise removal performance in accordance with a predetermined evaluation criterion. This configuration will be described as Embodiment 3.

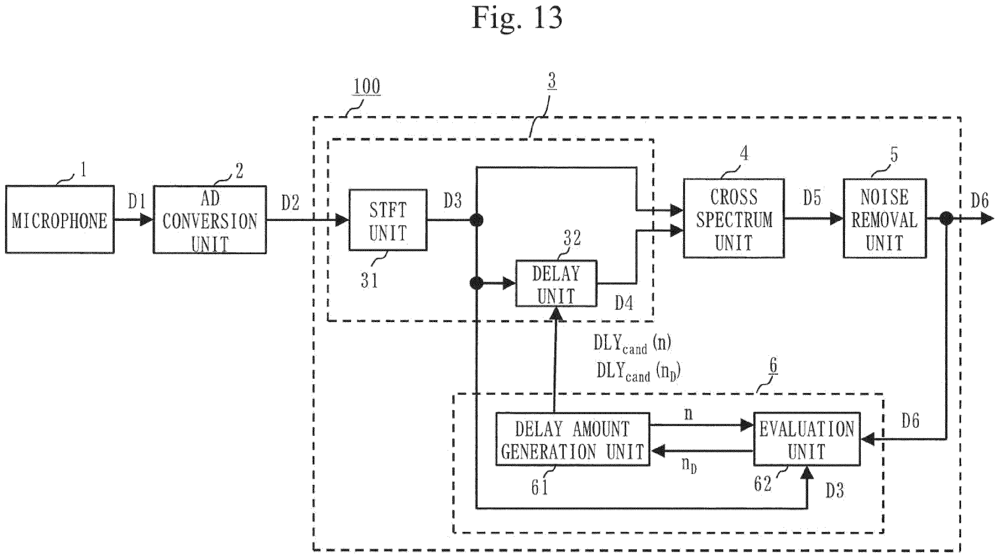

Fig. 13 is a block configuration diagram of a noise removal device according to Embodiment 3. In Fig. 13, the component which is different from Fig. 1 is a delay amount selection unit 6. The delay amount selection unit 6 is composed of a delay amount generation unit 61 and an evaluation unit 62. Other components are the same as those of Fig. 1, thereby omitting the description.

The delay amount selection unit 6 evaluates noise removal performance in accordance with predetermined evaluation criteria (for example, when an evaluation value related to the noise removal performance is the highest, when an evaluation value related to the noise removal performance exceeds a threshold value, and the like) using the first array D3 of frequency spectra and the power spectrum 6 of a target signal so as to select a delay amount satisfying the predetermined evaluation criteria from a plurality of candidates for a delay amount. Then, the selected delay amount $DLY_{cand}(n_D)$ is outputted to the delay unit 32. Hereinafter, an evaluation value related to the noise removal performance is abbreviated to an "evaluation value".

A series of processing related to the selection of a delay amount, which is internal processing of the delay amount selection unit 6, will be next described.

The delay amount generation unit 61 generates a candidate $DLY_{cand}(n)$ for one delay amount from a plurality of candidates for the delay amount and outputs the candidate $DLY_{cand}(n)$ to the delay unit 32. Here, n denotes the number of the candidate for the delay amount. Further, the delay amount generation unit 61 notifies the evaluation unit 62 of the number n of the candidate for the delay amount.

The evaluation unit 62 uses the power spectrum D6 of a target signal, which is generated by using the candidate $DLY_{cand}(n)$ for the delay amount, and the first array D3 of frequency spectra to select a delay amount $DLY_{cand}(n)$ which satisfies the predetermined evaluation criteria, for example, which gives the highest evaluation value described later. The number n of the delay amount at this time is notified to the delay amount generation unit 61 as the number $n_D$ of the selected delay amount.

The evaluation for noise removal performance by the evaluation unit 62 may be performed for all of a plurality of candidates for a delay amount until a delay amount with the highest evaluation value is obtained, but the evaluation is not limited to this. For example, if a candidate for a delay amount that satisfies an evaluation value equal to or greater than a predetermined threshold value is obtained during evaluation work, the evaluation work may be ended midway and the number n of the candidate for the delay amount at this time may be notified to the delay amount generation unit 61. Further, if the evaluation value is lower than a predetermined delay amount set in advance as a result of the noise removal performance evaluation, the number n indicating the predetermined delay amount may be notified to the delay amount generation unit 61.

As an evaluation value in the evaluation unit 62, for example, a noise attenuation amount $NR_{LV}$ expressed in expression (3) and expression (4) can be used. The noise attenuation amount $NR_{LV}$ represents the power (dB) of a signal $nr_1(\omega)$, which is obtained by subtracting the power spectrum D6 ($P(\omega)$) of a target signal from the power spectrum ($X^2(\omega,k)$) of the current frame in the first array D3 of frequency spectra (that is, an input signal).

FORMULA 3

$$nr_1(\omega) = \begin{cases} X^2(\omega, k) - P(\omega) & ; \ if \ X^2(\omega, k) > P(\omega) \\ 0 & ; \ Else, \end{cases} \qquad (3)$$

FORMULA 4

$$NR_{LV} = 10 \log_{10} \sum_{\omega=0}^{W-1} nr_1(\omega) \qquad (4)$$

Here, k denotes the number of the current frame.

In expression (3), as long as the period of the target signal does not change, the target signal does not change before and after the noise removal processing of the present invention. Therefore, the influence of the target signal is canceled by the subtraction of the power spectrum based on expression (3). That is, the signal $nr_1(\omega)$ obtained by expression (3) does not include the target signal. Therefore, the noise attenuation amount $NR_{LV}$ represents the difference between a noise component in an input signal and a residual noise component after noise removal, that is, the difference in power of only noise before and after noise removal. This indicates that the larger the value of noise attenuation amount $NR_{LV}$, the smaller the residual noise in a power spectrum of a target signal, that is, the higher the noise removal performance.

When the period of a target signal varies, the noise attenuation amount $NR_{LV}$ can also be obtained using, for example, expression (5) and expression (6).

FORMULA 5

$$nr_2(\omega) = \begin{cases} N(\omega) - P_N(\omega) & ; \ if \ N(\omega) > P_N(\omega) \\ 0 & ; \ Else, \end{cases} \qquad (5)$$

FORMULA 6

$$NR_{LV} = 10 \log_{10} \sum_{\omega=0}^{W-1} nr_2(\omega) \qquad (6)$$

Here, $N(\omega)$ denotes an average power spectrum of noise contained in an input signal, and $P_N(\omega)$ denotes a power spectrum of residual noise contained in the power spectrum D6 of a target signal.

$N(\omega)$ can be obtained from the first array D3 of frequency spectra. $N(\omega)$ can be obtained from a frequency spectrum component of a noise-only interval by estimating an interval that does not contain a target signal (that is, the noise-only interval) in the first array D3 of frequency spectra using a known audio interval detection method such as an autocorrelation method and a cepstrum method.

Further, as a method for extracting the power spectrum $P_N(\omega)$ of residual noise from the power spectrum D6 of a target signal, for example, a minimum value tracking method of frequency spectrum components can be used. Specifically, a residual noise component can be estimated by sequentially tracking the minimum value or minimal value of the frequency spectrum component of the power spectrum $P(\omega)$ in the frequency direction.

The above description is on a case in which a noise attenuation amount is used as an example of an evaluation value, but the evaluation is not limited to this. For example, evaluation can be performed using an SN ratio $SN_{NR}$ of the power spectrum D6 of a target signal as expressed in expression (7). This evaluation value $SN_{NR}$ can accommodate changes in the period of a target signal.
FORMULA7

$$SN_{NR} = 10 \log_{10} \sum_{\omega=0}^{W-1} \left( \frac{P_S(\omega)}{P_N(\omega)} \right) \tag{7}$$

Here, $P_S(\omega)$ denotes a power spectrum of a target signal containing no residual noise, and $P_N(\omega)$ denotes a power spectrum of residual noise. The higher this $SN_{NR}$ is, the greater the difference between a target signal component and a residual noise component, indicating that the noise removal performance is higher. The power spectrum $P_S(\omega)$ of the target signal containing no residual noise can be calculated by estimating only a frequency spectrum component of the target signal, for example, by a peak picking method of a frequency spectrum.

The delay amount generation unit 61 generates a delay amount $DLY_{cand}(n_D)$ corresponding to the number no of the delay amount selected from a plurality of candidates for a delay amount and outputs the delay amount $DLY_{cand}(n_D)$ to the delay unit 32 again.

In the delay amount generation unit 61, a plurality of candidates for a delay amount can be set in advance, for example, to the extent that the correlation of a periodic signal of a target signal is not degraded. Specifically, for example, it can be set every 10 msec in the range from 10 msec to 200 msec. Here, these are only examples, and can be set as appropriate depending on a state of an input signal, such as a state of a target signal and a state of noise.

The evaluation unit 62 may present a selected delay amount and an evaluation value to a user, for example, using a display device (not shown) such as a display. Alternatively, data regarding a selected delay amount and an evaluation value may be outputted to measurement equipment connected to the noise removal device 100.

By presenting a selected delay amount and an evaluation value to a user, the user can determine whether the noise removal device is operating correctly. In addition, measurement equipment can adjust parameters based on data measured by the noise removal device, thereby being able to improve measurement accuracy.

The above-described configuration is also applicable to the configuration of Embodiment 2 illustrated in Fig. 11. In this case, the delay amount selection unit 6 evaluates noise removal performance in accordance with predetermined evaluation criteria (for example, when the evaluation value is the highest, and the like) using the first array D3 of frequency spectra and the power spectrum 6 of a target signal so as to select a delay amount satisfying the predetermined evaluation criteria from a plurality of candidates for a delay amount. Then, the selected delay amount $DLY_{cand}(n_D)$ may be outputted to the discrete-time-unit delay unit 32a.

By using an evaluation value and selecting a delay amount so that the evaluation value is high as described above, the delay amount can be adaptively selected so that the noise removal performance improves, accordingly being able to further improve the noise removal performance.

<Flowchart>

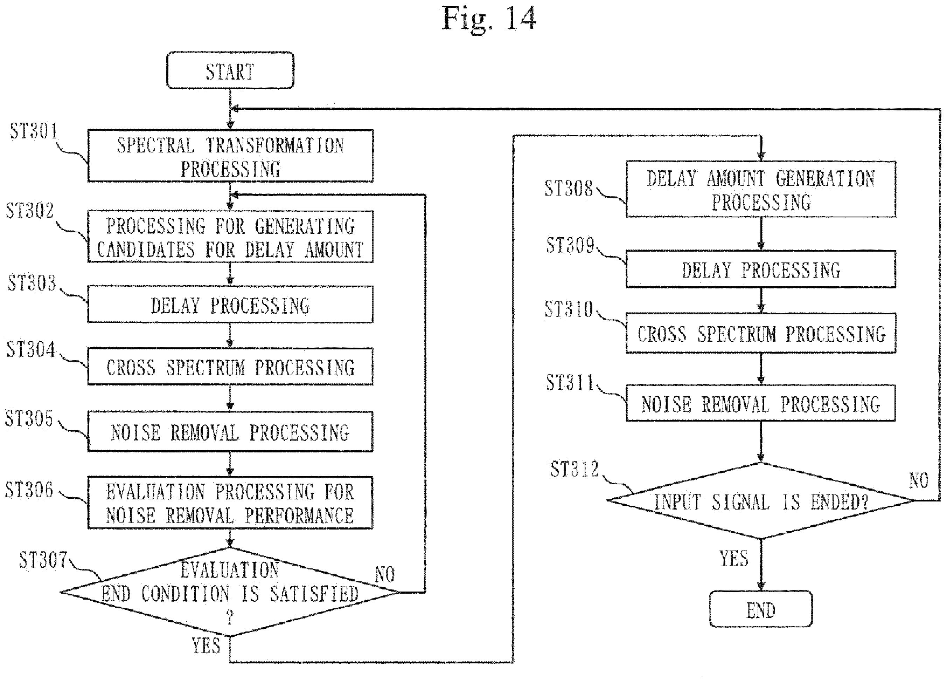

Fig. 14 is a flowchart showing an order of noise removal processing in Embodiment 3.

In step ST301, the STFT unit 31 performs predetermined windowing processing (Hanning window) on the input signal D2. Further, the STFT unit 31 performs spectral transformation processing by STFT for a predetermined analysis interval length (64 msec) so as to output the first array D3 of frequency spectra (step ST301).

In step ST302, the delay amount generation unit 61 generates a candidate $DLY_{cand}(n)$ for one delay amount from a plurality of candidates for the delay amount and outputs the candidate $DLY_{cand}(n)$ to the delay unit 32, and notifies the evaluation unit 62 of the number n of the candidate for the delay amount (step ST302).

In step ST303, the delay unit 32 produces a time delay corresponding to the delay amount $DLY_{cand}(n)$ on the first array D3 of frequency spectra generated in step ST301, and outputs the second array D4 of frequency spectra (step ST303).

In step ST304, the cross spectrum unit 4 generates a plurality of cross spectra from pairs of frequency spectra of frames having a time difference corresponding to the delay amount $DLY_{cand}(n)$ by using the second array D4 of frequency spectra generated in step ST303 and the first array D3 of frequency spectra generated in step ST301. The generated cross spectra of respective frames are outputted as the array D5 of cross spectra by combining the cross spectrum of a current frame and the cross spectra of past frames (step ST304).

In step ST305, the noise removal unit 5 removes noise of the input signal by averaging the array D5 of cross spectra, which is generated in step ST304, in the time direction so as to extract the power spectrum D6 of the target signal (step ST305).

In step ST306, the evaluation unit 62 calculates an evaluation value using the power spectrum D6 of the target signal calculated in step ST305 and the first array D3 of frequency spectra generated in step ST301 and evaluates the noise removal performance in accordance with predetermined evaluation criteria (step ST306).

In step ST307, the evaluation unit 62 determines whether an evaluation end condition is satisfied or not. Here, the evaluation end condition is, for example, that all the candidates for a delay amount are evaluated and a candidate for a delay amount with the highest evaluation value is selected, or that a candidate for a delay amount with an evaluation value equal to or higher than a predetermined threshold value is selected. When the evaluation end condition is not satisfied (NO in step ST307), the processing returns to step ST302 so as to evaluate another candidate for a delay amount. When the evaluation end condition is satisfied (YES in step ST307), the delay amount generation unit 61 is notified of the number $n_D$ of the delay amount evaluated to provide favorable noise removal performance, and the processing shifts to step ST308.

In step ST308, the delay amount generation unit 61 generates a delay amount $DLY_{and}(n_D)$ corresponding to the number no of the selected delay amount and outputs the delay amount $DLY_{cand}(n_D)$ to the delay unit 32 (step ST308).

In step ST309, the delay unit 32 produces a time delay corresponding to the selected delay amount $DLY_{cand}(n_D)$ on the first array D3 of frequency spectra calculated in step ST301, and generates and outputs the second array D4 of frequency spectra (step ST309).

In step ST310, the cross spectrum unit 4 generates a plurality of cross spectra from pairs of frequency spectra of frames having a time difference corresponding to the delay amount $DLY_{cand}(n_D)$ by using the second array D4 of frequency spectra generated in step ST309 and the first array D3 of frequency spectra generated in step ST301. The generated cross spectra of respective frames are outputted as the array D5 of cross spectra by combining the cross spectrum of a current frame and the cross spectra of past frames (step ST310).

In step ST311, the noise removal unit 5 removes noise of the input signal by averaging the array D5 of cross spectra, which is calculated in step ST310, in the time direction so as to extract the power spectrum D6 of the target signal (step ST311).

In step ST312, when the Fourier transform unit 3 determines that the input of the input signal D2 is ended (YES in step ST312), the noise removal processing is ended (END). When it is determined that the input signal D2 continues to be inputted (NO in step ST312), the processing returns to the beginning of step ST301 and sequentially continues the respective processing from step ST301 to step ST311 for the input signal D2 of the next frame.

The above-described series of processing related to selection of a delay amount performed in the delay amount selection unit 6 do not necessarily have to be performed during actual noise removal processing. For example, a delay amount may be selected in advance by preliminary evaluation. If a delay amount is selected in the preliminary evaluation, delay amount selection processing during actual noise removal is not required, thereby being able to reduce the processing amount and memory amount.

In addition, when there is sufficient time in selection of a delay amount (for example, there is sufficient convergence time for delay amount selection from the start of input signal input, the period change of a target signal is relatively gradual, and so forth), evaluation of all candidates for a delay amount does not have to be completed within a single frame. For example, candidates for a delay amount may be divided into short blocks for each frame and evaluated sequentially. Specifically, when the number n of candidates for a delay amount is 20, candidates for a delay amount in the range of n from 1 to 10 are evaluated in even-numbered frames and candidates for a delay amount in the range of n from 11 to 20 are evaluated in odd-numbered frames. Then, the delay amount with better noise removal performance can be selected based on the evaluation of two even and odd frames. Further, candidates for a delay amount may be evaluated one by one sequentially for each frame.

By distributing the delay amount selection processing over a plurality of frames, a peak value of a processing amount related to delay amount selection can be reduced.

The above-described configuration is also applicable to the configuration of Embodiment 2 illustrated in Fig. 11. In this case, the candidate $DLY_{cand}(n)$ for a delay amount and the selected delay amount $DLY_{cand}(n_D)$ may be outputted to the discrete-time-unit delay unit 32a.

As described above, the noise removal device detailed in Embodiment 3 is configured to use an evaluation value that increases when the noise removal performance is high, and adaptively select a delay amount from a plurality of candidates for a delay amount so that the evaluation value becomes higher.

Accordingly, in addition to the effect of being able to perform noise removal that can handle temporal variation of non-stationary noise whose timbre varies over time with an acoustic sensor installed at a single location, a delay amount providing favorable noise removal performance is automatically selected, further improving noise removal accuracy.

In addition, in the noise removal device detailed in Embodiment 3, a delay amount is automatically selected to improve noise removal performance for each frame and therefore, even if the period of a target signal changes, a delay amount is selected to follow the change, further improving noise removal accuracy.

Furthermore, since a delay amount is automatically adjusted by the above-described configuration, there is no need for parameter adjustment through trial and error, and a secondary effect of reducing work costs can also be obtained.

Embodiment 4.

In Embodiment 1 and Embodiment 2 described above, a delay amount is a predetermined fixed value. However, for example, if the period of an operating sound generated from equipment is obtained from the outside of the noise removal device, a delay amount may be calculated using the period information.

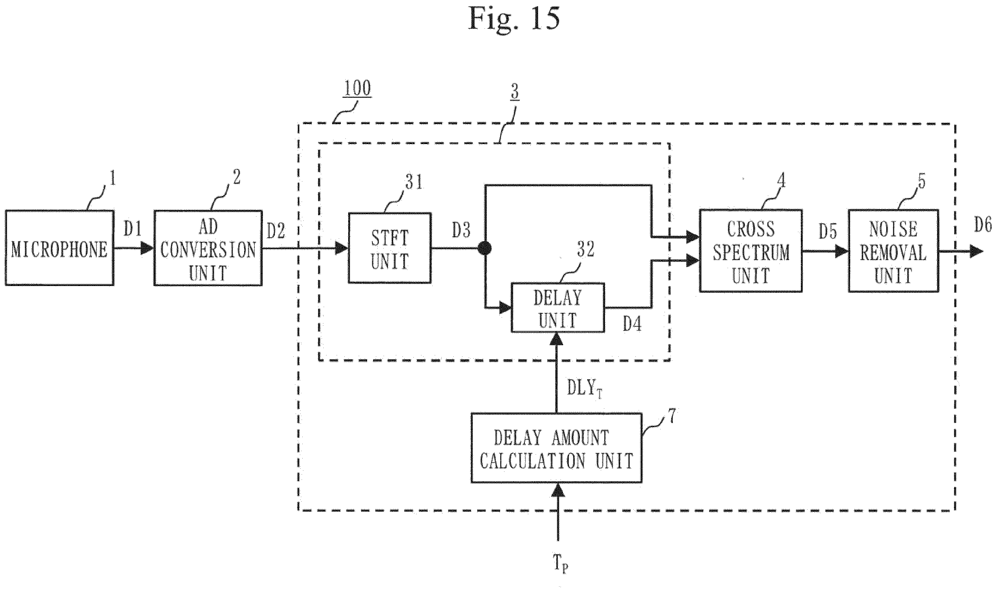

Fig. 15 is a block configuration diagram of a noise removal device according to Embodiment 4. The component which is different from Fig. 1 is a delay amount calculation unit 7. Other components are the same as those of Fig. 1, thereby being omitted.

The delay amount calculation unit 7 calculates a delay amount corresponding to temporal variation of a period $T_P$ using the period $T_P$ of an operation sound generated by equipment (that is, period information of a target signal). As a method for obtaining the period $T_P$, for example, if equipment to be measured has a rotating part and the rotation speed of the rotating part can be obtained from control information of the equipment, the rotation speed may be obtained as the period. Alternatively, the period $T_P$ may be estimated by acoustic analysis of an input signal. As a method of the acoustic analysis, for example, known methods such as an autocorrelation method and a cepstrum method can be employed.

For example, the following policy is conceivable as a method for calculating a delay amount from a target signal. In terms of noise removal, as the delay amount increases, the noise correlation decreases and the noise removal performance accordingly improves. On the other hand, in terms of emphasizing a target signal, the delay amount should be kept to the extent that the correlation of the target signal is not degraded so that the target signal is not removed.

When the period $T_P$ is very stable (for example, when the rotation speed does not change over time), the correlation of a target signal does not decrease even if a delay amount is large. Therefore, the delay amount is increased to remove noise more strongly. On the other hand, when the period $T_P$ is unstable, the delay amount is reduced so that the target signal is not removed.

When the temporal variation of period information (period $T_P$) of a target signal is small, in other words, the temporal variation is stable, the delay amount calculation unit 7 calculates a large delay amount, and in the case of vice versa, the delay amount calculation unit 7 calculates a small delay amount, and outputs the calculated delay amount as the delay amount $DLY_T$. Here, as an index for measuring the temporal variation of the period $T_P$, for example, a known statistical method such as variance and coefficient of variation of time series data of the period $T_P$ can be employed. Here, an exact period $T_P$ does not necessarily have to be measured, and the period $T_P$ may be an approximate value.

As a method for calculating the delay amount $DLY_T$, for example, a delay amount can be selected from a plurality of candidates for the delay amount depending on the magnitude of temporal variation (degree of variation) of the period Tp. Specifically. When the temporal variation of the period $T_P$ is large, the delay amount $DLY_T$ having a small value can be selected. Further, when the temporal variation of the period $T_P$ is small, the delay amount $DLY_T$ having a large value can be selected. The number of candidates for the delay amount may be appropriately set in accordance with the magnitude of temporal variation of a target signal.

Furthermore, the delay amount $DLY_T$ may be a continuous amount. For example, the delay amount $DLY_T$ can be a continuous amount that is inversely proportional to the temporal variation of the period $T_P$. In this case, the value of the delay amount $DLY_T$ decreases as the temporal variation of the period $T_P$ increases, and the value of the delay amount $DLY_T$ increases as the temporal variation of the period $T_P$ decreases.

The value of the delay amount $DLY_T$ may be changed for each frame, or may be changed by an average value of a plurality of frames, for example.

The delay unit 32 produces a time delay corresponding to the delay amount $DLY_T$ on the first array D3 of frequency spectra, and generates and outputs the second array D4 of frequency spectra.

The following processing is the same as that described in Embodiment 1, and description thereof will be omitted.

The above-described configuration is also applicable to the configuration of Embodiment 2 illustrated in Fig. 11. In this case, the calculated delay amount $DLY_T$ may be outputted to the discrete-time-unit delay unit 32a.

As described above, the noise removal device detailed in Embodiment 4 is configured to use period information related to a target signal so as to calculate a delay amount corresponding to the period information.

Thus, an appropriate delay amount can be automatically calculated in accordance with an operating state of equipment, which provides an advantageous effect that high noise removal accuracy can be obtained even when the operating state of the equipment changes over time.

Further, the noise removal device detailed in Embodiment 4 is configured to use period information of a target signal so as to calculate a large delay amount when temporal variation of the period information of the target signal is small, and to calculate a small delay amount when temporal variation of the period information of the target signal is large.

Thus, an appropriate delay amount can be automatically calculated in accordance with an operating state of equipment, which provides an advantageous effect that high noise removal accuracy can be obtained even when the operating state of the equipment changes over time.

Embodiment 5.

In each of the embodiments described above, the delay amount is set to a single value for the entire frequency band, but, for example, the delay amount may be set to a different value for each frequency.

For example, with respect to the first array D3 of frequency spectra, the delay unit 32 shown in Fig. 1, for example, sets a delay amount of $DLY_L$ for frequencies in the range of $0 \leq \omega < W/2$ (where W denotes the number of elements in the frequency spectra) and sets a delay amount of $DLY_H$ for frequencies in the range of $W/2 \leq \omega < W$. Here, $DLY_L$ and $DLY_H$ are different predetermined numerical values, and may be appropriately set in accordance with the state of an input signal (for example, frequency characteristics of a target signal, frequency characteristics of noise, and so forth). Furthermore, the delay amount is not limited to the two values of $DLY_L$ and $DLY_H$. For example, the delay amount may be set for each frequency bin (that is, $\omega$) of a frequency spectrum.

Furthermore, although the discrete-time-unit delay unit 32a in Embodiment 2 shown in Fig. 11 provides a delay to a time-domain signal, the delay amount can also be set to a different value for each frequency. For example, a time-domain signal is separated by band using a plurality of bandpass filters of different frequency bands and different delays are produced for respective bands, and then recomposition of the time-domain signal is performed. By performing the above processing, it is possible to produce different delays by frequency on a time-domain signal.

It goes without saying that setting a delay amount to a different value for each frequency is also applicable to the selected delay amount $DLY_{cand}(n_D)$ in Embodiment 3 and the delay amount DL Yr in Embodiment 4.

Setting a delay amount to a different value for each frequency realizes highly accurate noise removal even when there are a plurality of noise sources with different frequency characteristics.

In each of the embodiments described above, the sampling frequency of the input signal D2 is 16000 Hz, but the sampling frequency is not limited to this. For example, even when the sampling frequency is changed to 22000 Hz, an equivalent advantageous effect to the above-mentioned method can be obtained.

The noise removal device according to the present disclosure is suitable, for example, for use as an equipment abnormal sound diagnostic device. For example, by applying the noise removal device of the present invention to the front stage of abnormality detection processing based on equipment operating sounds, it is possible to achieve abnormality detection accuracy, which is robust against temporal variation of noise, with an acoustic sensor installed at a single location. Therefore, with this configuration, it can be used as an abnormal sound diagnostic device that achieves high abnormality detection performance.

The noise removal device according to the present disclosure does not require a plurality of acoustic sensors, being inexpensive. Further, the noise removal device according to the present disclosure is free from physical constraints such as an arrangement of acoustic sensors. In conventional noise removal devices, the phase difference needs to be changed depending on a type of target sound, but in such cases, an interval between two acoustic sensors has to be changed. On the other hand, the noise removal device according to the present disclosure can arbitrarily change the phase difference with a single acoustic sensor, and does not depend on an arrangement of the acoustic sensor.

In addition to the above, the present disclosure allows arbitrary modifications of any component of the embodiments or arbitrary omission of any component of the embodiments within the scope of the disclosure.

**Reference Signs List**

1: microphone; 2: AD conversion unit; 3: Fourier transform unit; 4: cross spectrum unit; 5: noise removal unit; 6: delay amount selection unit; 7: delay amount calculation unit; 31: STFT unit; 31a: first STFT unit; 31b: second STFT unit; 32: delay unit; 32σ: discrete-time-unit delay unit; 61: delay amount generation unit; 62: evaluation unit; 100: noise removal device; 200: processor; 201: volatile storage device; 202: non-volatile storage device; 203: input/output device; 204: signal path

**Claims**

1. A noise removal device comprising:

   a Fourier transform unit to divide one input signal, the input signal containing a component other than a target signal, into frames sectioned by fixed time and transform the input signal into a frequency spectrum so as to generate a plurality of pairs of frequency spectra, the pairs of frequency spectra having a fixed time difference, by using a delay amount;
   a cross spectrum unit to generate a plurality of cross spectra or a plurality of coherences from the plurality of pairs of frequency spectra having the fixed time difference; and
   a noise removal unit to average the plurality of cross spectra or the plurality of coherences so as to extract a power

EP 4 478 359 A1

spectrum of the target signal.

2. The noise removal device according to claim 1, wherein

the Fourier transform unit transforms the input signal into a frequency spectrum for each frame and combines a plurality of said frequency spectra so as to generate a first array of the frequency spectra,
the Fourier transform unit further includes a delay unit,
the delay unit delays the first array of the frequency spectra by using the delay amount so as to generate a second array of the frequency spectra, and
the pairs of frequency spectra having the fixed time difference are pairs composed of elements of the first array of the frequency spectra and elements of the second array of the frequency spectra.

3. The noise removal device according to claim 1, wherein

the Fourier transform unit further includes a delay unit,
the delay unit generates a signal obtained by delaying the input signal by using the delay amount,
the Fourier transform unit

transforms the input signal into a frequency spectrum for each frame and combines a plurality of said frequency spectra so as to generate a first array of the frequency spectra, and
transforms the delayed signal into a frequency spectrum for each frame so as to generate a second array of the frequency spectra, the second array of the frequency spectra being delayed compared to the first array of the frequency spectra, and

the pairs of frequency spectra having the fixed time difference are pairs composed of elements of the first array of the frequency spectra and elements of the second array of the frequency spectra.

4. The noise removal device according to claim 2 or 3, comprising:

a delay amount selection unit to use the first array of the frequency spectra and the power spectrum of the target signal so as to select the delay amount from a plurality of candidates for a delay amount so that an evaluation value related to noise removal performance is high, wherein
the Fourier transform unit generates the second array of the frequency spectra, the second array of the frequency spectra being delayed compared to the first array of the frequency spectra, by using the delay amount selected.

5. The noise removal device according to claim 2 or 3, comprising:

a delay amount calculation unit to use period information related to the target signal so as to calculate the delay amount corresponding to temporal variation of the period information, wherein
the Fourier transform unit generates the second array of the frequency spectra, the second array of the frequency spectra being delayed compared to the first array of the frequency spectra, by using the delay amount calculated.

6. The noise removal device according to claim 5, wherein
the delay amount calculation unit calculates a large value of the delay amount when the temporal variation of the period information is small, and calculates a small value of the delay amount when the temporal variation of the period information is large.

7. The noise removal device according to any one of claims 1 to 6, wherein
the delay amount has a different value for each frequency.

8. A noise removal method comprising:

by a Fourier transform unit, dividing one input signal, the input signal containing a component other than a target signal, into frames sectioned by fixed time and transforming the input signal into a frequency spectrum so as to generate a plurality of pairs of frequency spectra, the pairs of frequency spectra having a fixed time difference, by using a delay amount;
generating, by a cross spectrum unit, a plurality of cross spectra or a plurality of coherences from the plurality of pairs of frequency spectra having the fixed time difference; and

averaging, by a noise removal unit, the plurality of cross spectra or the plurality of coherences so as to extract a power spectrum of the target signal.

9. The noise removal method according to claim 8, wherein

the Fourier transform unit transforms the input signal into a frequency spectrum for each frame and combines a plurality of said frequency spectra so as to generate a first array of the frequency spectra,
the Fourier transform unit further includes a delay unit,
the delay unit delays the first array of the frequency spectra by using the delay amount so as to generate a second array of the frequency spectra, and
the pairs of frequency spectra having the fixed time difference are pairs composed of elements of the first array of the frequency spectra and elements of the second array of the frequency spectra.

10. The noise removal method according to claim 8, wherein

the Fourier transform unit further includes a delay unit,
the delay unit generates a signal obtained by delaying the input signal by using the delay amount,
the Fourier transform unit

transforms the input signal into a frequency spectrum for each frame and combines a plurality of said frequency spectra so as to generate a first array of the frequency spectra, and
transforms the delayed signal into a frequency spectrum for each frame so as to generate a second array of the frequency spectra, the second array of the frequency spectra being delayed compared to the first array of the frequency spectra, and

the pairs of frequency spectra having the fixed time difference are pairs composed of elements of the first array of the frequency spectra and elements of the second array of the frequency spectra.

11. The noise removal method according to claim 9 or 10, wherein

a delay amount selection unit uses the first array of the frequency spectra and the power spectrum of the target signal so as to select the delay amount from a plurality of candidates for a delay amount so that an evaluation value related to noise removal performance is high, and
the Fourier transform unit generates the second array of the frequency spectra, the second array of the frequency spectra being delayed compared to the first array of the frequency spectra, by using the delay amount selected.

12. The noise removal method according to claim 9 or 10, wherein

a delay amount calculation unit uses period information related to the target signal so as to calculate the delay amount corresponding to temporal variation of the period information, and
the Fourier transform unit generates the second array of the frequency spectra, the second array of the frequency spectra being delayed compared to the first array of the frequency spectra, by using the delay amount calculated.

13. The noise removal method according to claim 12, wherein
the delay amount calculation unit calculates a large value of the delay amount when the temporal variation of the period information is small, and calculates a small value of the delay amount when the temporal variation of the period information is large.

14. The noise removal method according to any one of claims 8 to 13, wherein
the delay amount has a different value for each frequency.

Fig. 1

EP 4 478 359 A1

# Fig. 2

(A) TIME (Sec. )

T

(B)

CS CS CS CS CS CS CS CS

(C)

AVERAGING ON COMPLEX PLANE (NOISE REMOVAL PROCESSING)

CS: CROSS SPECTRUM PROCESSING

(D)

EP 4 478 359 A1

# Fig. 3

(A) TIME (Sec.)

T  T

(B)

CS  CS  CS  CS  CS  CS  CS

(C)

AVERAGING ON COMPLEX PLANE (NOISE REMOVAL PROCESSING)

CS: CROSS SPECTRUM PROCESSING

(D)

EP 4 478 359 A1

# Fig. 4

EP 4 478 359 A1

Fig. 5

EP 4 478 359 A1

Fig. 6

Fig. 7

EP 4 478 359 A1

# Fig. 8

EP 4 478 359 A1

# Fig. 9

START

ST101 — SPECTRAL TRANSFORMATION PROCESSING

ST102 — DELAY PROCESSING

ST103 — CROSS SPECTRUM PROCESSING

ST104 — NOISE REMOVAL PROCESSING

ST105 — INPUT SIGNAL IS ENDED?

NO

YES

END

EP 4 478 359 A1

# Fig. 10

EP 4 478 359 A1

Fig. 11

## Fig. 12

```
                    ┌─────────────┐
                    │    START    │
                    └──────┬──────┘
                           │         ◄──────────────────┐
                           ▼                            │
          ┌────────────────────────────────────┐       │
ST201 ────│ DELAY PROCESSING IN DISCRETE        │       │
          │           TIME UNIT                 │       │
          └────────────────┬───────────────────┘       │
                           ▼                            │
          ┌────────────────────────────────────┐       │
ST202A ───│ FIRST SPECTRAL TRANSFORMATION       │       │
          │           PROCESSING                │       │
          └────────────────┬───────────────────┘       │
                           ▼                            │
          ┌────────────────────────────────────┐       │
ST202B ───│ SECOND SPECTRAL                     │       │
          │ TRANSFORMATION PROCESSING           │       │
          └────────────────┬───────────────────┘       │
                           ▼                            │
          ┌────────────────────────────────────┐       │
ST203 ────│ CROSS SPECTRUM PROCESSING           │       │
          └────────────────┬───────────────────┘       │
                           ▼                            │
          ┌────────────────────────────────────┐       │
ST204 ────│ NOISE REMOVAL PROCESSING            │       │
          └────────────────┬───────────────────┘       │
                           ▼                            │
                    ╱─────────────╲         NO          │
ST205 ─────────────< INPUT SIGNAL IS ENDED? >───────────┘
                    ╲─────────────╱
                           │ YES
                           ▼
                    ┌─────────────┐
                    │     END     │
                    └─────────────┘
```

EP 4 478 359 A1

## Fig. 13

EP 4 478 359 A1

## Fig. 14

```
                    ┌──────────────┐
                    │    START     │
                    └──────┬───────┘
                           │
ST301 ┌────────────────────▼────────────────┐
      │   SPECTRAL  TRANSFORMATION           │
      │         PROCESSING                   │
      └────────────────────┬────────────────┘
                           │
ST302 ┌────────────────────▼────────────────┐
      │  PROCESSING  FOR  GENERATING         │
      │  CANDIDATES  FOR  DELAY  AMOUNT      │
      └────────────────────┬────────────────┘
                           │
ST303 ┌────────────────────▼────────────────┐
      │        DELAY  PROCESSING             │
      └────────────────────┬────────────────┘
                           │
ST304 ┌────────────────────▼────────────────┐
      │   CROSS  SPECTRUM  PROCESSING        │
      └────────────────────┬────────────────┘
                           │
ST305 ┌────────────────────▼────────────────┐
      │   NOISE  REMOVAL  PROCESSING         │
      └────────────────────┬────────────────┘
                           │
ST306 ┌────────────────────▼────────────────┐
      │  EVALUATION  PROCESSING  FOR         │
      │  NOISE  REMOVAL  PERFORMANCE         │
      └────────────────────┬────────────────┘
                           │
ST307               ◇ EVALUATION          NO
              END CONDITION  IS  SATISFIED ──┐
                           ?                 │
                          YES                │

ST308 ┌─────────────────────────────────────┐
      │   DELAY  AMOUNT  GENERATION          │
      │         PROCESSING                   │
      └────────────────────┬────────────────┘
                           │
ST309 ┌────────────────────▼────────────────┐
      │        DELAY  PROCESSING             │
      └────────────────────┬────────────────┘
                           │
ST310 ┌────────────────────▼────────────────┐
      │   CROSS  SPECTRUM  PROCESSING        │
      └────────────────────┬────────────────┘
                           │
ST311 ┌────────────────────▼────────────────┐
      │   NOISE  REMOVAL  PROCESSING         │
      └────────────────────┬────────────────┘
                           │
ST312            ◇ INPUT  SIGNAL  IS  ENDED?  NO
                          YES
                    ┌──────▼───────┐
                    │     END      │
                    └──────────────┘
```

EP 4 478 359 A1

Fig. 15

EP 4 478 359 A1

## INTERNATIONAL SEARCH REPORT

| | International application No. |
|---|---|
| | **PCT/JP2022/013363** |

### A. CLASSIFICATION OF SUBJECT MATTER

*G10L 21/0208*(2013.01)i; *G10L 21/0232*(2013.01)i; *G10L 21/0264*(2013.01)i
FI:    G10L21/0264 Z; G10L21/0208 100Z; G10L21/0232

According to International Patent Classification (IPC) or to both national classification and IPC

### B. FIELDS SEARCHED

Minimum documentation searched (classification system followed by classification symbols)

G10L21/0208; G10L21/0232; G10L21/0264

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2011-33717 A (SECOM CO LTD) 17 February 2011 (2011-02-17) entire text, all drawings | 1-14 |
| A | WO 2018/131099 A1 (NEC CORP ) 19 July 2018 (2018-07-19) paragraph [0079], fig. 2 | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 May 2022** | **14 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2022/013363**

| Patent document cited in search report | Publication date (day/month/year) | Patent family member(s) | Publication date (day/month/year) |
|---|---|---|---|
| JP 2011-33717 A | 17 February 2011 | (Family: none) | |
| WO 2018/131099 A1 | 19 July 2018 | US 2019/0335273 A1<br>paragraph [0130], fig. 2 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011033717 A